# EUROPÄISCHE PATENTSCHRIFT

(11) **EP 0 870 589 B1**
(45) Veröffentlichungstag und Bekanntmachung des Hinweises auf die Patenterteilung: **05.09.2001**
(21) Anmeldenummer: 98106012.2
(22) Anmeldetag: 02.04.1998
(51) Int. Cl.: B29C 45/17

(54) **Spritzgiessmaschine**
Injection moulding machine
Machine à mouler par injection

(30) Priorität: 08.04.1997 AT 58897
(43) Veröffentlichungstag der Anmeldung: 14.10.1998
(73) Patentinhaber: ENGEL MASCHINENBAU GESELLSCHAFT MBH, A-4311 Schwertberg (AT)
(72) Erfinder: Urbanek, Otto, 4020 Linz (AT)
(74) Vertreter: Torggler, Paul Norbert, Dr.

(56) Entgegenhaltungen:
- EP-A- 0 311 133
- EP-A- 0 448 504
- EP-A- 0 726 131
- EP-A- 0 754 534
- WO-A-98/02291

## Beschreibung

Die Erfindung bezieht sich auf eine Spritzgießmaschine mit einem in Seitenansicht C-förmigen Rahmen, dessen Schenkel unter dem Einfluß der Schließkraft an ihren freien Enden auseinandergedrückt werden, wobei die den Schenkeln zugeordneten beiden Formaufspannplatten dadurch parallel gehalten werden, daß zwischen mindestens einer Formaufspannplatte und dem zugehörigen Schenkel eine Verschwenkung stattfindet.

Derartige Spritzgießmaschinen mit holmloser Formschließeinrichtung erlauben im klassischen Fall (EP 0 311 133 B2) die Verschwenkung der feststehenden Formaufspannplatte zusammen mit dem zugehörigen Schenkel des die Schließkraft aufnehmenden Rahmens, wobei ein Gelenk zwischen der bewegbaren Formaufspannplatte und dem anderen Rahmenschenkel es ermöglicht, daß sich beim Aufbringen der Schließkraft die bewegbare Formaufspannplatte parallel zur feststehenden Formaufspannplatte einstellt. Es ist auch möglich, beide Formaufspannplatten durch Gelenke von den zugehörigen Schenkeln des Spannrahmens abzukoppeln (vgl. DE 295 16 398 U). In beiden Fällen können die Gelenke, welche die Verschwenkung vermitteln, sowohl durch ein Lager mit gegeneinander verschwenkbaren Teilen (beispielsweisse drehbaren Achszapfen) oder durch einen verformbaren, gegebenenfalls in den Maschinenrahmen integrierten Halteteil vermittelt werden.

Insbesondere bei den üblichen mit Holmen versehenen Spritzgießmaschinen ist es seit langem bekannt, den Verfahrensablauf zu überwachen, indem die tatsächlich auf das Werkzeug aufgebrachte Schließkraft durch Messung des Hydraulikdruckes oder durch Messung der Holmdehnung innerhalb des Schließ- und Öffnungszyklus registriert wird. Die Überwachung der Dehnung eines einzigen Holmes genügt dabei für den Formschutz gegen irrtümlich in der Form verbliebene Teile sowie zur Feststellung eines zu großen Forminnendruckes, welcher die Form auftreibt. Prinzipiell ist es auch möglich, durch gleichzeitige Überwachung der Dehnung aller vier Holme eine unsymmetrische Anlage der Formränder oder eine einseitige Belastung der Form durch eine unsymmetrisch angeordnete oder irrtümlich nicht gleichmäßig gefüllte Form festzustellen. Eine solche Feststellung erfordert jedoch einen dauernden Ausgleich aus anderen Gründen auftretender Unterschiede in der Dehnung der einzelnen Holme, sodaß die Überwachung aller Holme zur Feststellung von Störungen in der Symmetrie der Einrichtung bzw. des Verfahrensablaufes sich nicht durchgesetzt hat.

Einrichtungen zur Messung der Rahmendehnung sind auch bei holmlosen Spritzgießmaschinen bereits vorgeschlagen worden (vgl. EP 0 726 131). Die Erfindung geht demgegenüber jedoch von der Überlegung aus, daß Spritzgießmaschinen der eingangs definierten Art die Möglichkeit bieten, Unsymmetrien in der Belastung der Form durch Messungen an einem einzigen Gelenk festzustellen. Die Erfindung besteht somit darin, eine Meßeinrichtung zur dauernden Überwachung der Drehung bzw. Verformung des die Verschwenkung vermittelnden Gelenkes vorgesehen ist.

Besonders einfach verläuft diese Messung dann, wenn nicht die Drehung um einen Achszapfen zu überwachen ist, wie im Fall der EP 0 311 133 B2, sondern wenn die Verschwenkung der Formaufspannplatte(n) gegenüber dem Rahmen durch einen verformbaren Halteteil vermittelt wird. In diesem Fall liefert bereits die Anbringung eines einzigen Dehnmeßstreifens in dem durch die Schließkraft verformten Bereich eine Aussage darüber, ob bei einem bestimmten Schließ- und Öffnungszyklus gegenüber dem Standardfall Unsymmetrien aufgetreten sind. Üblicherweise wird man bei verformbaren Gelenken, die durch einen in Maschinenlängsrichtung verlaufenden Balken verkörpert sind, an der Ober- und Unterseite des Balkens einen Dehnrneßstreifen anbringen, um zwischen der Stauchung und Biegung des Gelenkes unterscheiden zu können. Sind zwei Balken nebeneinander angeordnet, so erlaubt die Verwendung von vier Dehnmeßstreifen nicht nur die Feststellung von Unsymmetrien in Schwenkrichtung des Gelenkes, sondern auch in Achsrichtung.

Einzelheiten der Erfindung werden anschließend anhand der Zeichnung erläutert. In dieser ist

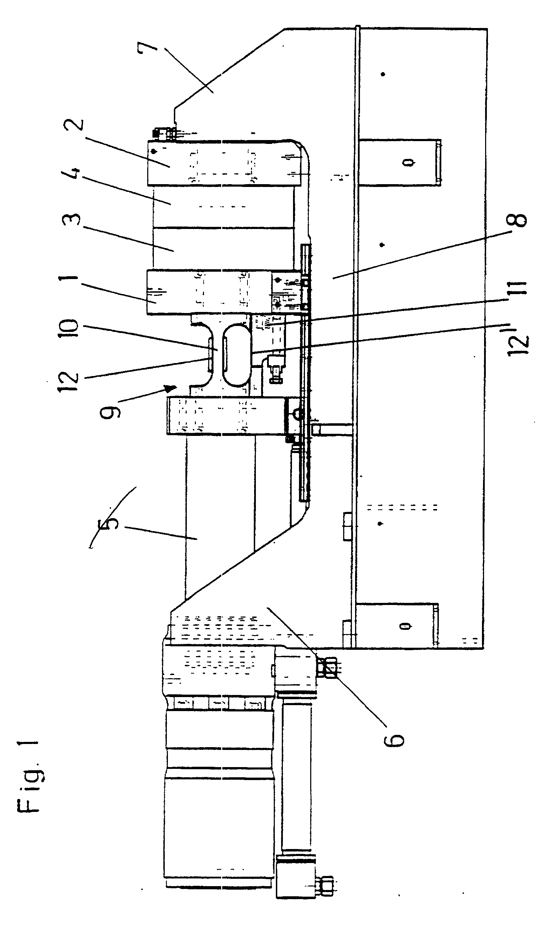

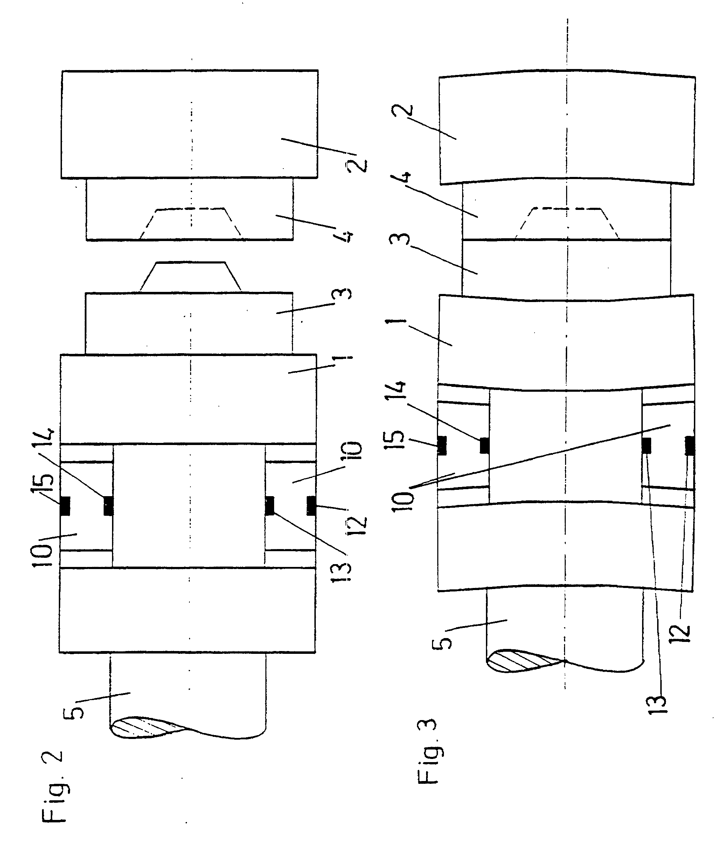

Fig. 1 die Seitenansicht der Schließeinrichtung einer Spritzgießmaschine, Fig. 2 zeigt eine schematische Draufsicht auf den Formbereich dieser Maschine im unbelasteten Zustand, Fig. 3 in belastetem Zustand.

In Fig. 1 ist eine Einrichtung zum Spritzgießen von Kunststoffen dargestelt, wobei der zum . Plastifizieren und Einspritzen des Kunststoffes in die Form dienende Teil der Einrichtung weggelassen ist. Dargestellt ist die sogenannte Schließeinheit, welche dazu dient, eine bewegbare Formaufspannplatte 1 von der feststehenden Formaufspannplatte 2 wegzufahren und dadurch den Raum zwischen den Formhälften 3, 4 zu öffnen, bzw. dazu, um während des Einspritzvorganges die Formhälften 3, 4 so stark zusammenzupressen, daß die Form durch den Forminnendruck nicht geöffnet werden kann.

Der im vorliegenden Fall in Form einer Hydraulikeinheit ausgebildete Antrieb für die bewegbare Formaufspannplatte 1 übt eine Kraft in der Größenordnung von über 100 Tonnen aus. Diese Kraft wird bei herkömmlichen Maschinen durch Längsholme aufgenommen. Solche Längsholme fehlen bei Maschinen gemäß dem Ausführungsbeispiel der Erfindung. Vielmehr nimmt dort ein C-förmiger Spannrahmen die Schließkraft auf, welcher aus zwei vertikalen Schenkeln 6, 7 und einem horizontalen Steg 8 besteht. Durch die Schließkraft spreizen sich die oberen Enden der Schenkel 6 und 7 geringfügig auseinander. Damit trotzdem die Form geschlossen bleibt, ist im vorliegenden Fall die feststehende Formaufspannplatte 2 fest mit dem Schenkel 7 verbunden, und ein Gelenk 9 erlaubt es der bewegbaren Formaufspannplatte 1, die geringfügige Verschwenkung der feststehenden Formaufspannplatte 2 mitzumachen.

Das Gelenk 9 besteht im wesentlichen aus zwei nebeneinander angeordneten, in Seitenansicht I-förmigen Balken 10, wogegen der Fortsatz 11 lediglich die Aufgabe hat, bei übermäßiger Verschwenkung der Formaufspannplatte 1 einen Anschlag zu bilden.

Wesentlich für das Ausführungsbeispiel der Erfindung ist die Anordnung von mindestens einem Dehnmeßstreifen 12 an einem der beiden Balken 10. Dabei ist es sinnvoll, unterhalb von mindestens einem der Dehnmeßstreifen 12 - 15 einen weiteren Dehnmeßstreifen 12' - 15' anzuordnen, damit die Stauchung der Balken 10 von deren Biegung unterschieden werden kann. An sich wäre es aber auch möglich, mit bloß einem Dehnmeßstreifen 12 das Auslangen zu finden, da bereits ein Meßstreifen eine Aussage darüber erlaubt, ob Abweichungen vom Normalverhalten auf eine relativ stärkere Belastung der oberen und unteren Formhälfte zurückzuführen sind. Bringt man auf beiden Balken 10 Dehnmeßstreifen an, läßt sich auch eine unsymmetrische Belastung der Form in bezug auf die vertikale Längsmittelebene feststellen. Die Anordnung von jeweils zwei Dehnmeßstreifen 12, 13 bzw. 14, 15 auf jedem der Balken 10 erlaubt es überdies, auch Durchbiegungen der Formaufspannplatte 1, wie sie in Fig. 3 übertrieben dargestellt sind, zu registrieren.

Das Ausführungsbeispiel der Erfindung wurde anhand einer holmlosen Spritzgießeinrichtung mit einem Drehgelenk demonstriert. Sie ist jedoch in gleicher Weise anwendbar, falls zwischen beiden Formaufspannplatten und dem zugehörigen Rahmenschenkel jeweils ein Gelenk angeordnet ist, wobei es nicht darauf ankommt, ob die Verschwenkbarkeit der Formaufspannplatte durch ein Gelenk mit Achszapfen oder durch Verformung eines biegsamen Teiles verursacht ist. in jedem Fall erlaubt es die Überwachung einer Schwenkbewegung statt der üblichen Überwachung von Dehnungen bzw. Stauchungen mit weniger Meßstellen auszukommen und überdies möglichst unmittelbar den interessierenden Formbereich zu überwachen.

## Patentansprüche

1. Spritzgießmaschine mit einem in Seitenansicht C-förmigen Rahmen, dessen Schenkel (6,7) an ihren freien Enden unter dem Einfluß der Schließkraft auseinandergedrückt werden, wobei die den Schenkeln zugeordneten beiden Formaufspannplatten (1,2) dadurch parallel gehalten werden, daß zwischen mindestens einer Formaufspannplatte und dem zugehörigen Schenkel eine Verschwenkung stattfindet, **dadurch gekennzeichnet**, daß eine Meßeinrichtung zur dauernden Überwachung der Drehung bzw. Verformung des die Verschwenkung vermittelnden Gelenkes (9) vorgesehen ist.

2. Spritzgießmaschine nach Anspruch 1, **dadurch gekennzeichnet**, daß bei einem achslosen Gelenk (9) die Meßeinrichtung durch Dehnmeßstreifen (12-15) verkörpert ist.

3. Spritzgießmaschine nach Anspruch 2, **dadurch gekennzeichnet**, daß an der Ober- und Unterseite eines durch mindestens einen in Maschinenlängsrichtung verlaufenden Balken (10) gebildeten Gelenkes je ein Dehnmeßstreifen (12,12') angeordnet ist.

4. Spritzgießmaschine nach Anspruch 3, **dadurch gekennzeichnet**, daß das Gelenk aus zwei nebeneinander angeordneten Balken (10) und die Meßeinrichtung aus mindestens vier Dehnmeßstreifen (12-15) besteht.

## Claims

1. Injection moulding machine with a frame which ist C-shaped viewed from the side, the legs (6, 7) of which are pushed apart at their free ends by the effect of the locking force, wherein the two die platens (1, 2) associated with the legs are kept parallel in that pivoting takes place between at least one die platen and the associated leg, **characterised in that** a measuring means is provided for continuous monitoring of the rotation and distortion of the joint (9) providing the pivoting.

2. Injection moulding machine according to claim 1, **characterised in that** where there is a joint (9) without an axle, the measuring means is provided in the form of strain gauges (12-15).

3. Injection moulding machine according to claim 2, **characterised in that** a strain gauge (12, 12') is arranged on each of the upper and lower surfaces of a joint formed by at least one bar (10) running in the longitudinal direction of the machine.

4. Injection moulding machine according to claim 3, **characterised in that** the joint is composed of two adjacently arranged bars (10) and the measuring means of at least four strain gauges (12-15).

## Revendications

1. Machine de moulage par injection comportant un cadre en forme de C selon une vue en élévation latérale, dont les branches (6, 7) sont repoussées dans le sens d'un écartement mutuel, au niveau de leurs extrémités libres, sous l'influence de la force de fermeture, les deux plateaux de serrage de moule (1, 2), qui sont associés aux branches, étant retenus parallèles entre eux par le fait qu'un pivotement se produit entre au moins un plateau de serrage de moule et la branche associée, **caractérisée en ce qu**'il est prévu un dispositif de mesure pour contrôler de façon permanente la rotation ou la déformation de l'articulation (9) permettant le pivotement.

2. Machine de moulage par injection selon la revendication 1, **caractérisée en ce que** dans le cas d'une articulation (9) sans axe, le dispositif de mesure est constitué par des jauges extensométriques (12-15).

3. Machine de moulage par injection selon la revendication 2, **caractérisée en ce que** respectivement une jauge extensométrique (12, 12') est disposée sur la face supérieure et sur la face inférieure d'une articulation formée par au moins une poutre (10) qui s'étend dans la direction longitudinale de la machine.

4. Machine de moulage par injection selon la revendication 3, **caractérisée en ce que** l'articulation est constituée de deux poutres (10) disposées côte-à-côte et que le dispositif de mesure est constitué par au moins quatre jauges extensométriques (12-15).
